(19) **Europäisches Patentamt**
**European Patent Office**
**Office européen des brevets**

(11) **EP 1 653 236 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
**G01N 35/10** (2006.01)

(21) Anmeldenummer: **05021570.6**

(22) Anmeldetag: **01.10.2005**

(54) **Verfahren und Vorrichtung zum Regeln einer Flüssigkeitsdosierung mittels Druckmessung**

Method and apparatus for controlling a transfer of liquid with a pressure measurement

Procédé et appareil pour contrôle de transfert de liquide avec un capteur de pression

(84) Benannte Vertragsstaaten:
**DE FR GB IT**

(30) Priorität: **29.10.2004 DE 102004052832**

(43) Veröffentlichungstag der Anmeldung:
**03.05.2006 Patentblatt 2006/18**

(73) Patentinhaber: **EPPENDORF AG**
**22339 Hamburg (DE)**

(72) Erfinder: **Sander, Dietmar, Dr.-Ing.**
**21502 Geesthacht (DE)**

(74) Vertreter: **Hauck Patent- und Rechtsanwälte et al**
**Postfach 11 31 53**
**20431 Hamburg (DE)**

(56) Entgegenhaltungen:
EP-A- 1 059 535     EP-A- 1 150 105
US-A1- 2002 188 410     US-A1- 2004 089 051
US-B1- 6 370 942

**Beschreibung**

Die Erfindung bezieht sich auf ein Verfahren zum Dosieren von Flüssigkeitsvolumina und auf eine Vorrichtung zum Durchführen des Verfahrens.

Bei bekannten Kolbenhubvorrichtungen wird durch Verschieben eines Kolbens in einem Zylinder ein Gaspolster bewegt, um flüssige Probe in eine Pipettenspitze oder eine andere Probenaufnahme einzusaugen oder aus dieser auszustoßen. Das Volumen wird mit Hilfe der zum Stellweg des Kolbens proportionalen Volumenverdrängung des Gaspolsters ermittelt. Als Stellelement bzw. Aktorik zum Verschieben des Kolbens im Zylinder wird z.B. ein Schrittmotor eingesetzt, der präzise und von der Arbeitslast unabhängig Arbeitspunkte für die Aufnahme und Abgabe von Flüssigkeit anfährt. Nach dem Erreichen der Arbeitspunkte wird bis zur vollständigen Aufnahme oder Abgabe der Flüssigkeit abgewartet. Die Dosierung beruht darauf, daß zwischen Gaspolster, Flüssigkeit in der Pipettenspitze und Umgebung ein Druckausgleich bis zum Erreichen eines statischen Gleichgewichts stattfindet.

Aus der EP-A-1 150 105 ist ein Gaspolster-Mikrodosiersystem zum Dosieren von Flüssigkeiten im Mikroliter- und Submikroliterbereich bekannt. Das System hat ein Flüssigkeitsreservoir mit einem Speicherraum für die zu dosierende Flüssigkeit, dessen Begrenzung von einem nach außen führenden Flüssigkeitsdurchgang und einem Gasdurchgang unterbrochen ist. Ein Gasverdrängungssystem mit einer Mikropumpe zum Pumpen eines Gases hat eine Verbindung mit dem Gasdurchgang. Mit der Mikropumpe steht eine Dosiersteuerung zum Erzeugen eines Unterdruckes oder Überdruckes durch Betätigen der Mikropumpe und zum Beaufschlagen des Flüssigkeitsreservoirs mit dem Unterdruck oder Überdruck in Wirkverbindung, um Flüssigkeit durch den Flüssigkeitsdurchgang in den Speicherraum aufzunehmen oder aus diesem abzugeben. Das System weist einen Drucksensor zum Erfassen des Druckes im Gasverdrängungssystem auf, mit dem die Dosiersteuerung in Wirkverbindung steht, um das aufgenommene oder abgegebene Flüssigkeitsvolumen zu ermitteln oder auf einen vorgegebenen Wert zu steuern. Die Dosiersteuerung regelt den Unterdruck oder Überdruck im Gasverdrängungssystem beim Ansaugen oder Abgeben von Flüssigkeit durch Erfassen des darin herrschenden Druckes mittels des Drucksensors und Steuern der Pumprate oder Volumenverdrängung der Mikropumpe auf einen vorgegebenen Wert oder Wertverlauf und ermittelt oder steuert auf einen vorgegebenen Wert das aufgenommene oder abgegebene Flüssigkeitsvolumen über die Pumprate oder Volumenverdrängung der Mikropumpe.

Die Ermittlung des abgegebenen Volumens durch Kenntnis der Pumprate ist zeitkritisch und ungenau, insbesondere wenn kleinere Flüssigkeitsvolumina bei relativ hohen Überdrücken im Freistrahl abzugeben sind und die Pumprate druckabhängig ist. Auch die Zuhilfenahme von Gaszustandsgleichungen ist durch die schnelle und zu kennende Volumenverdrängung zur Erzeugung der Überdrücke ebenfalls ungenau und für die Bestimmung abzugebender Flüssigkeitsvolumina ungeeignet.

Davon ausgehend liegt der Erfindung die Aufgabe zugrunde, ein Verfahren zum Dosieren von Flüssigkeitsvolumina zur Verfügung zu stellen, das eine genaue dynamische Bestimmung des dosierten Flüssigkeitsvolumens ermöglicht. Ferner liegt der Erfindung die Aufgabe zugrunde, eine zur Durchrührung des Verfahrens geeignete Vorrichtung zum Dosieren von Flüssigkeitsvolumina zur Verfügung zu stellen.

Die Aufgabe wird durch ein Verfahren mit den Merkmalen des Anspruches 1 gelöst.

Bei dem erfindungsgemäßen Verfahren zum Dosieren von Flüssigkeitsvolumina wird

(i) eine Probenaufnahme mit einem Aufnahmevolumen, dessen Begrenzung von einem nach außen führenden Flüssigkeitsdurchgang und einem Gasdurchgang durchbrochen ist, mit dem Flüssigkeitsdurchgang in eine Flüssigkeit eingetaucht;

(ii) ein Gasverdrängungssystem von einem Antrieb derart gesteuert, dass sich ein monoton steigender Unterdruck p in der Probenaufnahme einstellt, der mit einer Rate dp/dt zunimmt;

(iii) der zeitliche Verlauf des Druckes in der Probenaufnahme gemessen;

(iv) der Zeitpunkt des Einströmens von Flüssigkeit in die Probenaufnahme aufgrund einer Abweichung der zeitlichen Druckänderung in zwei aufeinanderfolgenden Zeitabschnitten der Druckmessung ermittelt;

(v) wobei im Zeitpunkt des Einströmens entweder der Antrieb des Gasverdrängungssystems gestoppt wird oder weiter monoton betrieben wird;

(vi) das aufgenommen Volumen $\Delta v$ gemäß $\Delta v = \Delta p \times G$ ermittelt, wobei es sich bei G um einen Gerätekennwert handelt und bei $\Delta p$ um eine Druckänderung, welche abhängig davon, ob ab dem Zeitpunkt des Einströmens der Antrieb mit unveränderter Pumprate monoton weiter betrieben oder im Zeitpunkt des Einströmens gestoppt wird, unterschiedlich berechnet wird, nämlich im ersten Fall aus

$$\Delta p = (dp/dt)\, \Delta t + p_E - p$$

und im zweiten Fall aus

$$\Delta p = p_E - p,$$

wobei es sich bei $p_E$ um den Unterdruck im Einströmzeitpunkt, bei $\Delta t$ um die seit dem Einströmzeitpunkt verstrichene Zeitdauer und bei p um den gemessenen Unterdruck handelt; und wobei der Gerätekennwert entweder gemäß

$$G = -v_E /(p_E + p_O),$$

oder gemäß

$$G = \Delta v^* / (dp/dt)$$

bestimmt wird, wobei es sich bei $p_O$ um den Absolutdruck, bei $v_E$ um das Volumen von Gasverdrängungssystem und Probenaufnahme im Einströmzeitpunkt, bei dp/dt um die unter Punkt (ii) spezifizierte Rate und bei $\Delta v^*$ um die Volumenverdrängungsrate des Gasverdrängungssystems vor dem Einströmzeitpunkt handelt;
(vii) das ermittelte aufgenommen Volumen mit einem Vorgabewert des aufzunehmenden Volumens verglichen;
(viii) beim Erreichen des Vorgabewertes durch das aufgenommene Volumen der an die Probenaufnahme angelegte Unterdruck schlagartig abgebaut und
(ix) die Probenaufnahme aus der Flüssigkeit herausgezogen.

Bei diesem Verfahren erfolgt bei der Aufnahme der Flüssigkeit eine dynamische Bestimmung des aufgenommenen Flüssigkeitsvolumens bei veränderlichem Druckverlauf in drei Phasen mit unterschiedlicher Pumpwirkung: In einer ersten Phase wird nach dem Eintauchen einer Probenaufnahme (z.B. Pipettenspitze) in eine Flüssigkeit ein monoton steigender Unterdruck von einer Ausgangsposition eines Antriebes des Gasverdrängungssystems ausgehend erzeugt. Solange der Unterdruck den Kapillarunterdruck der Flüssigkeit in der Probenaufnahme noch nicht erreicht, kann die Flüssigkeit nicht in die Probenaufnahme einströmen. Die zweite Phase beginnt mit dem Einströmen der Flüssigkeit in die Probenaufnahme. Dieser Zeitpunkt ist durch einen geknickten Verlauf des Druckes in der Probenaufnahme über der Zeit gekennzeichnet. Er wird durch Vergleich der Steigung der Druck-Zeit-Kurve in verschiedenen Zeitabschnitten ermittelt. Das danach eingeströmte Volumen ergibt sich aus der nachfolgenden Verringerung des Unterdruckes. Falls das Gasverdrängungssystem weiter betrieben wird, bezieht sich die Verringerung des Unterdruckes auf den fiktiven Anstieg des Unterdruckes aufgrund des weiteren Betriebes des Gasverdrängungssystems ohne ein Einströmen von Flüssigkeit. Falls das Gasverdrängungssystem gestoppt wird, bezieht sich die Verringerung des Unterdruckes auf dem Unterdruck im System zum Zeitpunkt des Einströmens. Die zweite Phase endet zu dem Zeitpunkt, zu dem das aufgenommene Volumen einem Vorgabewert entspricht. Infolgedessen wird zu Beginn der dritten Phase der vom Gasverdrängungssystem angelegte Unterdruck schlagartig abgebaut, gegebenenfalls bis auf einen Haltedruck, der die Flüssigkeit in der Probenaufnahme hält.
Erfindungsgemäß wird das aufgenommene Volumen gemäß

$$\Delta v = \Delta p \cdot \mathrm{Gerätekennwert} \quad \text{bestimmt,}$$

wobei der Gerätekennwert durch unterschiedliche Methoden gewonnen werden kann:

i) Gemäß idealem Gasgesetz ergibt sich im Einströmzeitpunkt:

$$\Delta v = -v_E \cdot \frac{\Delta p}{p_E + p_O},$$

und daraus:

$$\text{Gerätekennwert} = -\frac{v_E}{p_E + p_O}$$

ii) Durch Kenntnis der Antriebsgeschwindigkeit bzw. der Volumenverdrängungsrate des Gasverdrängungssystems vor dem Einströmzeitpunkt $\Delta v^*$ und der Druckänderungsrate $\frac{dp}{dt}$ vor dem Einströmzeitpunkt ergibt sich wie folgt:

$$\text{Gerätekennwert} = \frac{\Delta v^*}{dp \, / dt}$$

Das aufgenommene Volumen wird wie folgt entweder bei weiterem monotonen Betrieb des Antriebs

$$\text{(a)} \qquad \Delta p = p_E + \Delta t \, \dot{p} - p$$

oder bei gestopptem Antrieb ermittelt:

$$\text{(b)} \qquad \Delta p = p_E - p$$

mit $\Delta v$ = aufgenommenes Volumen
$p$ = gemessener relativer Druck
$p_O$ = Absolutdruck
$v_E$ = Gasvolumen von Gasverdrängungssystem und Probenaufnahme im Einströmzeitpunkt
$p_E$ = gemessener relativer Druck im Einströmzeitpunkt
$p$ = Druckänderungsrate vor dem Einströmzeitpunkt
$\Delta t$ = Zeitdauer nach Einströmzeitpunkt

Die Bestimmung des abgegebenen Flüssigkeitsvolumens kann auf verschiedene Weise erfolgen. Falls das gesamte aufgenommene Flüssigkeitsvolumen in einem einzigen Abgabeschritt abgegeben wird, entspricht das abgegebene Flüssigkeitsvolumen den bekannten aufgenommenen Flüssigkeitsvolumen. Eine zusätzliche Bestimmung des abgegebenen Flüssigkeitsvolumens bei der Abgabe kann entfallen. Die Ermittlung der Strömungsparameter erfolgt durch das aufgenommene Volumen mit der Zeitdauer nach dem Einströmzeitpunkt bei dem gemittelten Unterdruck zwischen Einströmzeitpunkt und Aufnahmeende.

Weitere Ausgestaltungen des Verfahrens gemäß Anspruch 1 sind in den Unteransprüchen angegeben.

Einbezogen in die erfindungsgemäßen Verfahren sind verschiedene Ausführungen des Gasverdrängungssystems. Dabei handelt es sich z.B. um einen in einem Zylinder verschieblichen Kolben, insbesondere für das Dosieren größerer Flüssigkeitsvolumina im Milliliter- und Mikroliter-Bereich. Ferner einbezogen sind Pumpeinrichtungen, die für Dosiervolumina im Milliliter- bis Submikroliter-Bereich ausgeführt sein können. Insbesondere einbezogen sind Membran-Verdrängungseinrichtungen, die eine ein Verdrängungsvolumen begrenzende Membran und einen dieser zugeordneten Aktor (z.B. Piezo-Biegewandler) aufweisen.

Ferner wird die Aufgabe durch eine Vorrichtung mit den Merkmalen des Anspruches 10 gelöst.

Die erfindungsgemäße Vorrichtung zum Dosieren von Flüssigkeitsvolumina umfaßt

- eine Probenaufnahme mit einem Aufnahmevolumen, dessen Begrenzung von einem nach außen führenden Flüssigkeitsdurchgang zum Eintauchen in eine Flüssigkeit und einem Gasdurchgang durchbrochen ist;
- ein an den Gasdurchgang anschließbares Gasverdrängungssystem mit einem Antrieb;

- einen an das Gasverdrängungssystem oder an die Probenaufnahme anschließbaren Sensor zum Messen des Unterdruckes;
- eine mit dem Antrieb und dem Sensor verbundene elektrische Steuerungseinrichtung, die dazu eingerichtet ist,

(i) den Antrieb einzuschalten, so dass sich ein Unterdruck p in der Probenaufnahme einstellt, der mit einer Rate dp/dt zunimmt;

(ii) den zeitlichen Verlauf des Unterdruckes in der Probenaufnahme zu messen;

(iii) den Zeitpunkt des Einströmens von Flüssigkeit in die Probenaufnahme aufgrund einer Abweichung der zeitlichen Druckänderung in zwei aufeinanderfolgenden Zeitabschnitten der Druckmessung zu ermitteln;

(iv) im Zeitpunkt des Einströmens den Antrieb des Gasverdrängungssystems entweder zu stoppen oder weiter monoton zu betreiben;

(v) das aufgenommen Volumen $\Delta v$ gemäß $\Delta v = \Delta p \times G$ zu ermitteln, wobei es sich bei G um einen Gerätekennwert handelt und bei $\Delta p$ um eine Druckänderung, welche abhängig davon, ob ab dem Zeitpunkt des Einströmens der Antrieb mit unveränderter Pumprate monoton weiter betrieben oder im Zeitpunkt des Einströmens gestoppt wird, unterschiedlich berechnet wird, nämlich im ersten Fall aus

$$\Delta p = (dp/dt)\, \Delta t + p_E - p$$

und im zweiten Fall aus

$$\Delta p = p_E - p,$$

wobei es sich bei $p_E$ um den Unterdruck im Einströmzeitpunkt, bei $\Delta t$ um die seit dem Einströmzeitpunkt verstrichene Zeitdauer und bei p um den gemessenen Unterdruck handelt; und der Gerätekennwert gegeben ist durch

$$G = -v_E /(p_E + p_O),$$

oder

$$G = \Delta v^* / (dp/dt),$$

wobei es sich bei $p_O$ um den Absolutdruck, bei $v_E$ um das Volumen von Gasverdrängungssystem und Probenaufnahme im Einströmzeitpunkt, bei dp/dt um die unter (i) spezifizierte Rate und bei $\Delta v^*$ um die Volumenverdrängungsrate des Gasverdrängungssystems vor dem Einströmzeitpunkt handelt;

(vi) das ermittelte aufgenommen Volumen mit einem Vorgabewert des aufzunehmenden Volumens zu vergleichen;

(vii) beim Erreichen des Vorgabewertes durch das aufgenommene Volumen den an die Probenaufnahme angelegte Unterdruck schlagartig abzubauen;

(viii) die Probenaufnahme aus der Flüssigkeit herauszuziehen.

Weitere Ausgestaltungen der erfindungsgemäßen Vorrichtung sind in den Unteransprüchen angegeben.

Die Erfindung wird nachfolgend anhand der anliegenden Zeichnung eines Ausführungsbeispiels näher erläutert. In der Zeichnung zeigen:

Fig. 1    Vorrichtung zum Dosieren von Flüssigkeitsvolumina in einer grobschematischen Darstellung;

Fig. 2    Druckkurve bei der Aufnahme von Flüssigkeit in einem Druck-Zeit-Diagramm.

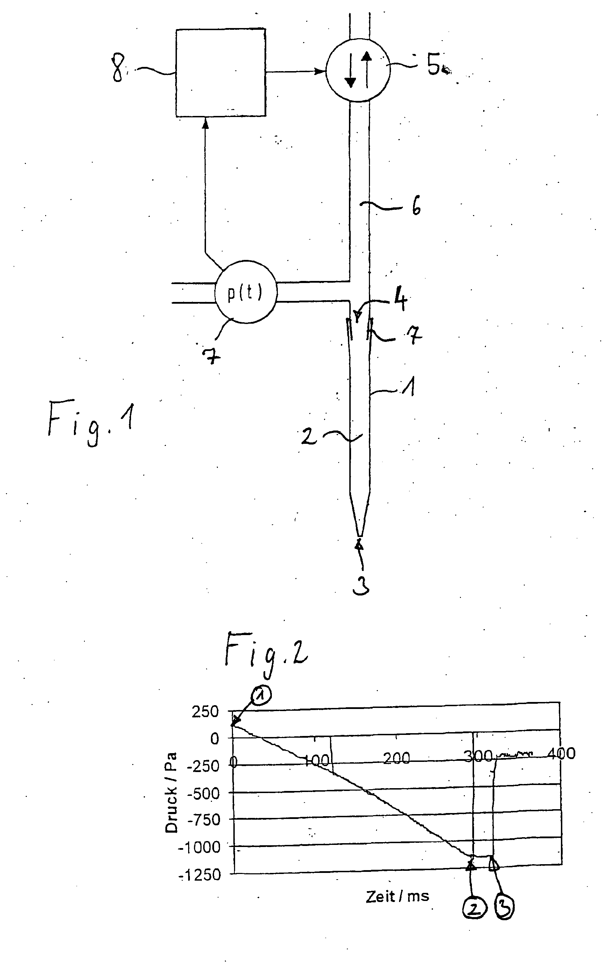

Gemäß Fig. 1 weist die Vorrichtung zum Dosieren eine Probenaufnahme 1 auf, die als Pipettenspitze ausgeführt ist. Die röhrchenförmige Probenaufnahme 1 hat innen ein Aufnahmevolumen 2, einen das Aufnahmevolumen mit der Umgebung verbundenen Flüssigkeitsdurchgang 3 an einem unteren, konischen Ende und einen vom Aufnahmevolumen 2 nach außen führenden Gasdurchgang 4 an einem leicht konisch erweiterten, oberen Ende.

Ferner ist ein Gasverdrängungssystem mit einer bidirektionalen Pumpe 5 vorhanden, die über einen Verbindungskanal 6 mit einem Ansatz 7 zum Aufstecken des konisch erweiterten Endes der Probenaufnahme 1 verbunden ist.

Die Pumpeinrichtung 5 ist z.B. eine (Mikro- ) Membranpumpe, eine Kolbenhubeinrichtung oder eine Membrananordnung z.B. mit einem Piezoaktor.

An dem Verbindungskanal 6 ist ein Drucksensor 7 angeschlossen.

Ferner ist eine elektrische Steuerungseinrichtung 8 verbunden, die elektrisch mit der Pumpeinrichtung 5 und dem Drucksensor 7 verbunden ist.

In einer ersten Betriebsweise, welche nicht gegenstand der vorliegenden Erfindung ist, wird nach dem Eintauchen des Flüssigkeitsdurchgangs 3 in eine Flüssigkeit von der elektrischen Steuerungseinrichtung 8 die Pumpe 5 schlagartig bzw. mit der maximalen negativen Pumprate in Betrieb gesetzt, um möglichst schnell einen bestimmten Arbeits-Unterdruck in dem Verbindungskanal 6 und dem Arbeitsvolumen 2 anzufahren. Das dabei durch den Flüssigkeitsdurchgang 3 einströmende Volumen der Flüssigkeit ist vernachlässigbar.

Ferner steuert die Steuerungseinrichtung 8 die Pumpeinrichtung 5 so, daß der vom Drucksensor 7 gemessene Unterdruck möglichst genau dem vorgegebenen Arbeits-Unterdruck entspricht. Das in dieser Phase durch den Flüssigkeitsdurchgang 3 einströmende Volumen der Flüssigkeit ist proportional zum Antriebsweg des Antriebs der Pumpeinrichtung 5. Der Antriebsweg ist z.B. bei Verwendung von Piezoaktoren proportional zu der von der Steuerungseinrichtung 8 angelegten Steuerspannung $\Delta u$.

Mit Hilfe dieser Steuerspannung $\Delta u$ ermittelt die elektrische Steuerungseinrichtung 8 das jeweils aufgenommene Volumen und vergleicht es mit einem Vorgabewert des aufzunehmenden Volumens. Bei hinreichender Übereinstimmung stoppt die Steuerungseinrichtung 8 schlagartig die Pumpeinrichtung, z.B. indem die Spannung beim Piezoaktor unverändert gehalten wird. Bei gestoppter Pumpeinrichtung 5 dringt keine weitere Flüssigkeit durch den Flüssigkeitsdurchgang 3 ein. Das in der Phase des Stoppens der Pumpeinrichtung 5 noch eindringende Flüssigkeitsvolumen ist vernachlässigbar.

Ferner ermittelt die Steuerungseinrichtung 8 aufgrund der aufgenommenen Flüssigkeit $\Delta v$ und der Zeit für die Aufnahme der Flüssigkeit $\Delta t$ bei der Aufnahme der Flüssigkeit einen Strömungsparameter S für den entsprechenden Arbeits-Unterdruck p. Dieser ist wie folgt definiert:

$$S = \Delta v/ \Delta t \text{ bei dem Druck p}$$

Für die Abgabe wird die Probenaufnahme 1 mit dem Flüssigkeitsdurchgang 3 auf einen Abgabeort (z.B. in einem Laborgefäß oder in einer Aufnahme einer Mikrotiterplatte) gerichtet. Die Steuerungseinrichtung 8 steuert die Pumpeinrichtung 5 so, daß ein Überdruck in dem Verbindungskanal 6 und im Aufnahmevolumen 2 erzeugt wird, der die aufgenommene Flüssigkeit durch den Flüssigkeitsdurchgang 3 herausdrückt. Bevorzugt erfolgt die Abgabe der Flüssigkeit im Freistahl, wofür der Überdruck entsprechend hoch gewählt ist.

Bei der Abgabe ermittelt die Steuerungseinrichtung 8 aufgrund des Strömungsparameters S und des vorgegebenen oder gemessenen Überdruckes p den Zeitpunkt $\Delta t$, in dem das abzugebende Volumen $\Delta v$ abgegeben ist. Bei konstantem Überdruck ist der Zeitpunkt $\Delta t$ leicht mit Hilfe der obigen Definition ermittelbar. Ändert sich der Druck im Verlaufe der Abgabe, werden die unter gemessenen Druckbedingungen in Zeitabschnitten abgegebenen Volumina integriert. Der Zeitpunkt der Abgabe des abzugebenden Volumens ist erreicht, wenn das integrierte Volumen dem abzugebenden Volumen entspricht.

Bei Erreichen des Zeitpunktes stoppt die Steuerungseinrichtung 8 schlagartig die Pumpeinrichtung 5. Das dann noch heraustretende Flüssigkeitsvolumen ist vernachlässigbar. Einbezogen ist das vorzeitige Stoppen der Pumpeinrichtung 5 durch die Steuerungseinrichtung 8, um das Auslaufen von Flüssigkeit in der Phase des Abstoppens der Pumpeinrichtung 5 zu kompensieren.

Gemäß der Erfindung setzt die Steuerungseinrichtung 8 die Pumpeinrichtung 5 nach Eintauchen des Flüssigkeitsdurchgangs 3 in Betrieb, so daß im Aufnahmevolumen 2 ein Unterdruck erzeugt wird, der monoton ansteigt. Die Phase des monotonen Anstiegs des Unterdruckes in der Aufnahme 2 ist in der Fig. 2 zwischen den Punkten 1 und 2 gezeigt. In dieser Phase dringt Flüssigkeit aufgrund von Benetzungs- und Kapillarkräften noch nicht in den Flüssigkeitsdurchgang 3 ein.

Das Eindringen von Flüssigkeit ist durch ein Abknicken der Druckkurve gekennzeichnet, wie in dem Bereich der Druckkurve zwischen den Punkten 2 und 3 der Fig. 2 gezeigt. Die Steuerungseinrichtung 8 ermittelt den Zeitpunkt des Einströmens der Flüssigkeit 2 durch wiederholten Vergleich der Steigung der Druckkurve in aufeinanderfolgenden Kurvenabschnitten.

Nach dem Zeitpunkt des Einströmens kann die Pumpeinrichtung 5 von der Steuerungseinrichtung 8 mit derselben Pumprate wie zuvor weiterbetrieben werden. Wenn die Pumpeinrichtung 5 von der Steuerungseinrichtung 8 nach dem Zeitpunkt des Einströmens mit konstanter Pumprate weiterbetrieben wird, ergibt sich zu jedem Zeitpunkt eine Druckdifferenz Δp zwischen der extrapolierten Druckkurve und dem gemessenen Druck p zwischen den Punkten 2 und 3.

Wenn die Pumpeinrichtung 5 im Zeitpunkt des Einströmens 2 von der Steuerungseinrichtung 8 abgestellt wird, ist für jeden nachfolgenden Zeitpunkt eine Druckdifferenz Δp aus dem zum Zeitpunkt des Einströmens gemessenen Druck $p_E$ und dem später gemessenen Druck p ermittelbar.

Mit Hilfe der Druckdifferenz Δp, dem Gasvolumen im Verbindungskanal 6 und dem Aufnahmevolumen 2 und dem gemessenen Druck $p_E$ im Einströmzeitpunkt ist das aufgenommene Volumen Δv der Flüssigkeit von der Steuerungseinrichtung folgendermaßen errechenbar:

$$\Delta v = \Delta p \cdot \text{Gerätekennwert}$$

Die Abgabe der Flüssigkeit erfolgt mit Hilfe des Strömungsparameters S, wie für die erstbeschriebene Betriebsweise erläutert.

**Patentansprüche**

1. Verfahren zum Dosieren von Flüssigkeitsvolumina, bei dem (i) eine Probenaufnahme (1) mit einem Aufnahmevolumen (2), dessen Begrenzung von einem nach außen führenden Flüssigkeitsdurchgang (3) und einem Gasdurchgang (4) durchbrochen ist, mit dem Flüssigkeitsdurchgang (3) in eine Flüssigkeit eingetaucht wird;

   (ii) ein Gasverdrängungssystem von einem Antrieb derart gesteuert wird, dass sich ein monoton steigender Unterdruck p in der Probenaufnahme einstellt, der mit einer Rate dp/dt zunimmt;
   (iii) der zeitliche Verlauf des Unterdruckes in der Probenaufnahme (1) gemessen wird;
   (iv) der Zeitpunkt des Einströmens von Flüssigkeit in die Probenaufnahme (1) aufgrund einer Abweichung der zeitlichen Druckänderung in zwei aufeinanderfolgenden Zeitabschnitten der Druckmessung ermittelt wird;
   (v) wobei im Zeitpunkt des Einströmens entweder der Antrieb des Gasverdrängungssystems gestoppt oder weiter monoton betrieben wird;
   (vi) das aufgenommen Volumen Δv gemäß Δv=Δp x G ermittelt wird, wobei es sich bei G um einen Gerätekennwert handelt und bei Δp um eine Druckänderung, welche abhängig davon, ob ab dem Zeitpunkt des Einströmens der Antrieb mit unveränderter Pumprate monoton weiter betrieben oder im Zeitpunkt des Einströmens gestoppt wird, unterschiedlich berechnet wird, nämlich im ersten Fall aus

$$\Delta p = (dp/dt)\, \Delta t + p_E - p$$

   und im zweiten Fall aus

$$\Delta p = p_E - p,$$

   wobei es sich bei $p_E$ um den Unterdruck im Einströmzeitpunkt, bei Δt um die seit dem Einströmzeitpunkt verstrichene Zeitdauer und bei p um den gemessenen Unterdruck handelt; und der Gerätekennwert entweder gemäß

$$G = -v_E /(p_E + p_O),$$

   oder gemäß

$$G = \Delta v^* / (dp/dt)$$

bestimmt wird, wobei es sich bei $p_O$ um den Absolutdruck, bei $v_E$ um das Volumen von Gasverdrängungssystem und Probenaufnahme im Einströmzeitpunkt, bei dp/dt um die unter Punkt (ii) spezifizierte Rate und bei $\Delta v^*$ um die Volumenverdrängungsrate des Gasverdrängungssystems vor dem Einströmzeitpunkt handelt;

(vii) das ermittelte aufgenommen Volumen mit einem Vorgabewert des aufzunehmenden Volumens verglichen wird;

(viii) beim Erreichen des Vorgabewertes durch das aufgenommene Volumen der an die Probenaufnahme angelegte Unterdruck schlagartig abgebaut wird und

(ix) die Probenaufnahme aus der Flüssigkeit herausgezogen wird.

**2.** Verfahren nach Anspruch 1, bei dem
die Probenaufnahme (1) mit dem Flüssigkeitsdurchgang (3) auf einen
Abgabeort gerichtet wird,
ein oder mehrere Strömungsparameter aus dem aufgenommenen Volumen cincs vorgegebenen Arbeits-Unterdruckes und der Zeitdauer für die Aufnahme des Volumens ermittelt wird/werden, an den Gasdurchgang (4) der Probenaufnahme (1) ein Überdruck
angelegt wird,
mit Hilfe des/der Strömungsparameter(s) und des Überdruckes der
Zeitpunkt ermittelt wird/werden, zu dem ein abzugebendes Volumen abgegeben ist und
beim Erreichen des Zeitpunktes der an die Probenaufnahme (1)
angelegte Überdruck schlagartig abgebaut wird.

**3.** Verfahren nach Anspruch 2, bei dem der Überdruck ein konstanter Überdruck ist.

**4.** Verfahren nach Anspruch 2, bei dem mittels des/der Strömungsparameter(s), des jeweils herrschenden Überdruckes und der jeweiligen Einwirkungszeit des Überdruckes das insgesamt abgegebene Volumen ermittelt wird und der Zeitpunkt, zu dem das abzugebende Volumen abgegeben ist, erreicht ist, wenn das ermittelte dem abgegebenen Volumen entspricht.

**5.** Verfahren nach einem der Ansprüche 2 bis 4, bei dem bei der Ermittlung des Zeitpunktes, zu dem das abzugebende Volumen abgegeben ist, die Abhängigkeit der Ausströmcharakteristik der Probenaufnahme (1) gemäß einer Referenz-Druck-Volumen-Kurve berücksichtigt wird.

**6.** Verfahren nach einem der Ansprüche 1 bis 5, bei dem der Unterdruck bei der Aufnahme von Flüssigkeit den Überdruck bei der Abgabe von Flüssigkeit unterschreitet.

**7.** Verfahren nach einem der Ansprüche 1 bis 6, bei dem der Unterdruck bei der Aufnahme und/oder der Überdruck bei der Abgabe so gewählt ist/sind, daß bei der Aufnahme und/oder Abgabe in die/aus der Probenaufnahme (1) Grenzflächen- und/oder Reibungseffekte überwunden werden.

**8.** Verfahren nach einem der Ansprüche 1 bis 7, bei dem der Überdruck bei der Abgabe so gewählt ist, daß die Flüssigkeit im Freistrahl aus der Probenaufnahme (1) abgegeben wird.

**9.** Verfahren nach einem der Ansprüche 1 bis 8, bei dem die aufgenommene Flüssigkeit in mehreren Teilschritten aus der Probenaufnahme (1) abgegeben wird.

**10.** Vorrichtung zum Dosieren von Flüssigkeitsvolumina, umfassend

- eine Probenaufnahme (1) mit einem Aufnahmevolumen (2), dessen Begrenzung von einem nach außen führenden Flüssigkeitsdurchgang (3) zum Eintauchen in eine Flüssigkeit und einem Gasdurchgang (4) durchbrochen ist;
- ein an den Gasdurchgang (4) anschließbares Gasverdrängungssystem mit einem Antrieb;
- einen an das Gasverdrängungssystem oder an die Probenaufnahme (1) anschließbaren Sensor (7) zum Messen des Unterdruckes;
- eine mit dem Antrieb und dem Sensor (7) verbundene elektrische Steuerungseinrichtung (8), die dazu eingerichtet ist,

(i) den Antrieb einzuschalten, so dass sich ein monoton steigender Unterdruck p in der Probenaufnahme einstellt, der mit einer Rate dp/dt zunimmt;

(ii) den zeitlichen Verlauf des Unterdruckes in der Probenaufnahme (1) zu messen;

(iii) den Zeitpunkt des Einströmens von Flüssigkeit in die Probenaufnahme (1) aufgrund einer Abweichung der zeitlichen Druckänderung in zwei aufeinanderfolgenden Zeitabschnitten der Druckmessung zu ermitteln;

(iv) im Zeitpunkt des Einströmens den Antrieb des Gasverdrängungssystems entweder zu stoppen oder weiter monoton zu betreiben;

(v) das aufgenommen Volumen $\Delta v$ gemäß $\Delta v = \Delta p \times G$ zu ermitteln, wobei es sich bei G um einen Gerätekennwert handelt und bei $\Delta p$ um eine Druckänderung, welche abhängig davon, ob ab dem Zeitpunkt des Einströmens der Antrieb mit unveränderter Pumprate monoton weiter betrieben oder im Zeitpunkt des Einströmens gestoppt wird, unterschiedlich berechnet wird, nämlich im ersten Fall aus

$$\Delta p = (dp/dt)\, \Delta t + p_E - p$$

und im zweiten Fall aus

$$\Delta p = p_E - p,$$

wobei es sich bei $p_E$ um den Unterdruck im Einströmzeitpunkt, bei $\Delta t$ um die seit dem Einströmzeitpunkt verstrichene Zeitdauer und bei p um den gemessenen Unterdruck handelt; und der Gerätekennwert gegeben ist durch

$$G = -v_E /(p_E + p_O),$$

oder

$$G = \Delta v^* / (dp/dt),$$

wobei es sich bei $p_O$ um den Absolutdruck, bei $v_E$ um das Volumen von Gasverdrängungssystem und Probenaufnahme im Einströmzeitpunkt, bei (dp/dt) um die unter (i) spezifizierte Rate und bei $\Delta v^*$ um die Volumenverdrängungsrate des Gasverdrängungssystems vor dem Einströmzeitpunkt handelt;

(vi) das ermittelte aufgenommen Volumen mit einem Vorgabewert des aufzunehmenden Volumens zu vergleichen;

(vii) beim Erreichen des Vorgabewertes durch das aufgenommene Volumen den an die Probenaufnahme angelegte Unterdruck schlagartig abzubauen;

(viii) die Probenaufnahme aus der Flüssigkeit herauszuziehen.

11. Vorrichtung gemäß Anspruch 10, bei der die elektrische Steuerungseinrichtung (8) dazu eingerichtet ist, einen oder mehrere Strömungsparameter aus dem aufgenommenen Volumen, einem vorgegebenen Arbeits-Unterdruckes und der Zeitdauer für die Aufnahme des Volumens zu ermitteln, den Antrieb so in Betrieb zu setzen, dass an den Gasdurchgang ein Überdruck angelegt wird, mit Hilfe des/der Strömungsparameter(s) und des Überdruckes den Zeitpunkt zu ermitteln, zu dem ein abzugebendes Volumen abgegeben ist und beim Erreichen des Zeitpunktes den Antrieb schlagartig zu stoppen.

12. Vorrichtung nach Anspruch 11, bei dem die elektrische Steuerungseinrichtung (8) dazu eingerichtet ist, einen konstanten Überdruck anzulegen.

13. Vorrichtung nach Anspruch 11, bei der die elektrische Steuerungscinrichtung (8) dazu eingerichtet ist, mittels des/der Strömungsparameter(s), des vom Drucksensor (7) ermittelten Überdruckes und der jeweiligen Einwirkungszeit des Überdruckes das insgesamt abgegebene Volumen zu ermitteln und den Antrieb außer Betrieb zu setzen, wenn das ermittelte dem abzugebenden Volumen entspricht.

14. Vorrichtung nach einem der Ansprüche 11 bis 13, bei der die elektrische Steuerungseinrichtung (8) dazu eingerichtet ist, bei der Ermittlung des Zeitpunktes, zu dem das abzugebende Volumen abgegeben ist, die Abhängigkeit der Ausströmcharakteristik der Probenaufnahme (1) gemäß einer Referenz-Druck-Volumen-Kurve zu bcrücksichtigen.

15. Vorrichtung nach einem der Ansprüche 10 bis 14, bei der die elektrische Steuerungseinrichtung (8) dazu eingerichtet ist, den Antrieb so zu steuern, dass der Unterdruck bei der Aufnahme den Überdruck bei der Abgabe von Flüssigkeit unterschreitet.

16. Vorrichtung nach einem der Ansprüche 10 bis 15, bei der die elektrische Steuerungseinrichtung (8) dazu eingerichtet ist, den Antrieb so zu steuern, dass der Unterdruck bei der Aufnahme und/oder der Überdruck bei der Abgabe Grenzflächen- und/oder Reibungseffekte bei der Aufnahme und/oder Abgabe von Flüssigkeit überwindet.

17. Vorrichtung nach einem der Ansprüche 10 bis 16, bei der die elektrische Steuerungseinrichtung (8) dazu eingerichtet ist, den Antrieb so zu steuern, dass der Überdruck bei der Abgabe die Flüssigkeit im Freistahl aus der Probenaufnahme (1) heraustreibt.

18. Vorrichtung nach einem der Ansprüche 10 bis 17, bei der die elektrische Steuerungseinrichtung (8) dazu eingerichtet ist, den Antrieb so zu steuern, dass aufgenommene Flüssigkeit in Teilschritten aus der Probenaufnahme (1) abgegeben wird.

19. Vorrichtung nach einem der Ansprüche 10 bis 18, bei der die elektrische Steuereinrichtung (8) über eine akustische Spraehausgabe verfügt.

20. Vorrichtung nach Anspruch 19, bei der die akustische Sprachausgabe derart ausgebildet ist, dass sie zu unterschiedlichen Arbeitsvorgängen passende Meldungen abgibt,

21. Vorrichtung nach Anspruch 19 oder 20, bei der die akustische Sprachausgabe durch Piezoaktoren oder Membranaktoren realisiert ist.

**Claims**

1. Method for dosing liquid volumes, wherein

    (i) a sample pick-up portion (1) with a pick-up volume (2), the boundary of which is perforated by a liquid passage (3) guiding to the outside and a by gas passage (4), is dipped into a liquid with the liquid passage (3);
    (ii) a gas displacement system is controlled by a drive such that a monotonically increasing negative pressure p is established in the sample pick-up portion, which increases with a rate dp/dt;
    (iii) the course in time of the negative pressure in the sample pick-up portion (1) is measured;
    (iv) the moment of the inflow of liquid into the sample pick-up portion (1) is determined on account of a discrepancy of the pressure change in time in two subsequent time periods of the pressure measurement;
    (v) in the moment of the inflow, either the drive of the gas displacement system is stopped, or continued to be operated monotonically:
    (vi) the picked-up volume $\Delta v$ is determined according to $\Delta v = \Delta p \times G$, wherein G is an apparatus parameter and $\Delta p$ a pressure change which is calculated differently depending on whether the drive is continued to be operated monotonically with unchanged pumping rate from on the moment of the inflow, or is stopped in the moment of the inflow, namely in the first case from

$$\Delta p = (dp/dt) \, \Delta t + p_E - p$$

and in the second case from

$$\Delta p = p_E - p$$

wherein $p_E$ is the negative pressure in the moment of inflow, $\Delta t$ the time period passed since the moment of inflow, and p is the measured negative pressure; and the apparatus parameter is determined either by

$$G = -v_E/(p_E + p_O),$$

or according to

$$G = \Delta v^*/(dp/dt),$$

wherein $p_O$ is the absolute pressure, $v_E$ is the volume of gas displacement system and sample pickup portion at the moment of inflow, dp/dt is the rate specified under point (ii) and $\Delta v^*$ is the volume displacement rate of the gas displacement system before the moment of inflow;
(vii) the determined picked-up volume is compared with a default value of the volume to be picked-up;
(viii) when the default value has been reached by the picked-up volume, the negative pressure applied to the sample pick-up portion is suddenly abated, and
(ix) the sample pick-up portion is drawn out of the liquid.

2. The method according to claim 1, wherein
the sample pick-up portion (1) with the liquid passage (3) is directed towards a delivering location,
one ore more flow parameter(s) is/are determined from the picked-up volume of a given negative working pressure and the time period required to pick up the volume,
an overpressure is applied to the gas passage (4) of the sample pick-up portion (1),
the moment at which a volume that is to be delivered will be delivered is determined with the aid of the flow parameter (s) and the overpressure, and when the moment is reached, the overpressure applied to the sample pick-up portion (1) is suddenly abated.

3. The method according to claim 2, wherein the overpressure is a constant overpressure.

4. The method according to claim 2, wherein the total delivered volume is determined by way of the flow parameter (s), the current overpressure and the current impact time of the overpressure, and the moment in which the volume to be delivered is delivered is reached when the determined volume corresponds to the delivered volume.

5. A method according to any one of claims 2 to 4, wherein in the detection of the moment at which the volume that has to be delivered is delivered, the dependence of the outflow characteristic of the sample pick-up portion (1) is taken into account according to a reference pressure-volume curve.

6. A method according to any one of claims 1 to 5, wherein the negative pressure when picking up liquid exceeds the overpressure when delivering liquid.

7. A method according to any one of claims 1 to 6, wherein the negative pressure when picking up and/or the overpressure when delivering liquid is/are selected such that when picking up and/or delivering into/from the sample pick-up portion (1), interfacial and/or frictional effects are overcome.

8. A method according to any one of claims 1 to 7, wherein the overpressure when delivering is selected such that the liquid is delivered in a free stream from the sample pick-up portion (1).

9. A method according to any one of claims 1 to 8, wherein the picked-up liquid is delivered in several sub-steps from the sample pick-up portion (1).

10. An apparatus for dosing liquid volumes, comprising

- a sample pick-up portion (1) with a pick-up volume (2), the boundary of which is perforated by a liquid passage (3) guiding to the outside and by a gas passage (4),
- a gas displacement system with a drive, which is adapted to be connected to the gas passage (4),
- a sensor (7) for measuring the negative pressure, adapted to be connected to the gas displacement system or to the sample pick-up portion (1),
- an electric control unit (8), connected to the drive and the sensor (7), adapted for

(i) switching on the drive such that a monotonically increasing negative pressure p is established in the sample pick-up portion which increases with a rate dp/dt;
(ii) measuring the course in time of the negative pressure in the sample pick-up portion (1);
(iii) determining the moment of the inflow of liquid into the sample pick-up portion (1) on account of a discrepancy of the pressure change in time in two subsequent time periods of the pressure measurement;
(iv) in the moment of the inflow, either stopping the drive of the gas displacement system or continuing to operate it monotonically;
(v) determining the picked-up volume $\Delta v$ according to $\Delta v = \Delta p \times G$, wherein G is an apparatus parameter and $\Delta p$ a pressure change which is calculated differently depending on whether the drive is continued to be operated monotonically with unchanged pumping rate from on the moment of the inflow, or is stopped in the moment of the inflow, namely in the first case from

$$\Delta p = (dp/dt)\, \Delta t + p_E - p$$

and in the second case from

$$\Delta p = p_E - p$$

wherein $p_E$ is the negative pressure at the moment of inflow, $\Delta t$ the time duration passed since the moment of the inflow, and p is the measured negative pressure; and the apparatus parameter is given either by

$$G = -v_E/(p_E + p_O)$$

or

$$G = \Delta v^*/(dp/dt),$$

wherein $p_O$ is the absolute pressure, $v_E$ is the volume of gas displacement system and sample pick-up portion at the moment of inflow, dp/dt is the rate specified under point (i) and $\Delta v^*$ is the volume displacement rate of the gas displacement system before the moment of inflow;
(vi) comparing the determined picked-up volume with a default value of the volume to be picked-up;
(vii) suddenly abating the negative pressure applied to the sample pick-up portion when the default value has been reached by the picked-up volume;
(viii) drawing the sample pick-up portion out of the liquid.

11. The apparatus according to claim 10, wherein the electric control unit (8) is adapted to determine one ore more flow parameters from the picked-up volume, a default negative working pressure and the time period required to pick-up the volume, to put the drive into operation such that an overpressure is applied to the gas passage, determine the moment at which volume that is to be delivered is delivered with the aid of the flow parameter(s), and suddenly stopping the drive when the moment is reached.

12. The apparatus according to claim 11, wherein the electric control unit (8) is adapted to apply a constant overpressure.

**13.** The apparatus according to claim 11, wherein the electric control unit (8) is adapted to determine the totally delivered volume by means of the flow parameter(s), the overpressure detected by the pressure sensor (7) and the respective action duration of the overpressure, and to put the drive out of operation when the determined volume corresponds to the volume that is to be delivered.

**14.** An apparatus according to any one of claims 11 to 13, wherein the electric control unit (8) is adapted to take the dependence of the outflow characteristic of the sample pick-up portion (1) according to a reference-pressure-volume curve into account in the determination of the moment at which the volume that has to be delivered is delivered.

**15.** An apparatus according to any one of claims 11 to 14, wherein the electric control unit (8) is adapted to control the drive such that the negative pressure when picking up liquid falls below the overpressure when delivering liquid.

**16.** An apparatus according to any one of claims 11 to 15, wherein the electric control unit (8) is adapted to control the drive such that the negative pressure when picking up and/or the overpressure when delivering overcomes interfacial and/or frictional effects when picking up and/or delivering liquids.

**17.** An apparatus according to any one of claims 11 to 16, wherein the electric control unit (8) is adapted to control the drive such that the overpressure when delivering drives out the liquid in a free stream from the sample pick-up portion (1).

**18.** An apparatus according to any one of claims 11 to 17, wherein the electric control unit is adapted to control the drive such that picked-up liquid is delivered in part steps from the sample pick-up portion.

**19.** An apparatus according to any one of claims 11 to 18, wherein the electric control (8) unit is provided with an acoustic speech output.

**20.** The apparatus according to claim 19, wherein the acoustic speech output is adapted to emit messages which fit to different working procedures.

**21.** An apparatus according to claim 19 to 20, wherein the acoustic speech output is realised by piezo actors or membrane actors.

**Revendications**

**1.** Procédé de dosage de volumes de liquide, dans lequel

(i) un récepteur d'échantillons (1) avec un volume de réception (2), dont la délimitation est traversée par une traversée de liquide (3) conduisant vers l'extérieur et par une traversée de gaz (4), est plongé dans un liquide avec la traversée de liquide (3) ;
(ii) un système de déplacement de gaz est commandé par un entraînement de telle sorte qu'il s'installe dans le récepteur d'échantillons une dépression p croissant de façon régulière et qui augmente selon un taux dp/dt ;
(iii) l'allure temporelle de la dépression dans le récepteur d'échantillons (1) est mesurée ;
(iv) l'instant de l'afflux de liquide dans le récepteur d'échantillons (1) est déterminé sur la base d'une divergence de la variation de pression dans le temps dans deux périodes successives de la mesure de pression ;
(v) l'entraînement du système de déplacement de gaz étant, à l'instant de l'afflux, soit arrêté, soit continuant à fonctionner de façon régulière ;
(vi) le volume reçu $\Delta v$ est déterminé selon $\Delta v = \Delta p \times G$, G étant une valeur caractéristique d'appareil et $\Delta p$ une variation de pression qui est calculée différemment selon que, à partir de l'instant de l'afflux, l'entraînement continue à fonctionner avec un taux de pompage inchangé ou selon que cet entraînement est arrêté à l'instant de l'afflux, le calcul s'effectuant dans le premier cas comme suit

$$\Delta p = (dp/dt)\,\Delta t + p_E - p$$

et dans le deuxième cas comme suit

$$\Delta p = p_E - p,$$

$p_E$ désignant la dépression à l'instant de l'afflux, $\Delta t$ désignant la durée écoulée depuis l'instant de l'afflux et p désignant la dépression mesurée ; et la caractéristique d'appareil étant définie soit selon

$$G = -v_E/(p_E + p_o),$$

soit selon

$$G = \Delta v^*/(dp/dt),$$

$p_O$ désignant la pression absolue, $v_E$ le volume du système de déplacement de gaz et du récepteur d'échantillons à l'instant de l'afflux, dp/dt le taux spécifié dans le point (ii), et $\Delta v^*$ le taux de déplacement de volume du système de déplacement de gaz avant l'instant de l' afflux ;
(vii) le volume reçu déterminé est comparé à une valeur prédéfinie du volume à recevoir ;
(viii) la dépression appliquée au récepteur d'échantillons est brusquement supprimée lorsque la valeur prédéfinie est atteinte par le volume reçu, et
(ix) le récepteur d'échantillons est extrait du liquide.

**2.** Procédé selon la revendication 1, dans lequel
le récepteur d'échantillons (1) avec la traversée de liquide (3) est dirigé vers un lieu de distribution,
un ou plusieurs paramètres d'écoulement est/son déterminé(s) à partir du volume reçu d'une dépression de travail prédéfinie et de la durée de la réception du volume,
une surpression est appliquée à la traversée de gaz (4) du récepteur d'échantillons (1),
l'instant où un volume à distribuer est distribué est déterminé à l'aide du/des paramètre(s) d'écoulement et de la surpression, et
la surpression appliquée au récepteur d'échantillons (1) est supprimée brusquement lorsque l'instant est atteint.

**3.** Procédé selon la revendication 2, dans lequel la surpression est une surpression constante.

**4.** Procédé selon la revendication 2, dans lequel le volume distribué au total est déterminé au moyen du/des paramètre (s) d'écoulement, de la surpression qui règne respectivement et du temps d'action respectif de la surpression, et l'instant où le volume à distribuer est distribué est atteint si le volume déterminé correspond au volume distribué.

**5.** Procédé selon une des revendications 2 à 4, dans lequel, lors de la détermination de l'instant où le volume à distribuer est distribué, la dépendance de la caractéristique d'écoulement de sortie du récepteur d'échantillons (1) est prise en compte selon une courbe pression-volume de référence.

**6.** Procédé selon une des revendications 1 à 5, dans lequel la dépression lors de la réception de liquide est supérieure à la surpression lors de la distribution de liquide.

**7.** Procédé selon une des revendications 1 à 6, dans lequel la dépression lors de la réception et/ou la surpression lors de la distribution est/sont choisie(s) de telle sorte que, lors de la réception et/ou lors de la distribution dans/à partir du récepteur d'échantillons (1), des effets de surfaces limites et/ou de frottement sont surmontés.

**8.** Procédé selon une des revendications 1 à 7, dans lequel la surpression lors de la distribution est choisie de telle sorte que le liquide est distribué à partir du récepteur d'échantillons (1) dans le jet libre.

**9.** Procédé selon une des revendications 1 à 8, dans lequel le liquide reçu est distribué en plusieurs étapes partielles à partir du récepteur d'échantillons (1).

**10.** Dispositif pour le dosage de volume de liquide, comprenant

- un récepteur d'échantillons (1) avec un volume de réception (2) dont la délimitation est traversée par une traversée de liquide (3) conduisant vers l'extérieur pour l'immersion dans un liquide et par une traversée de gaz (4) ;#
- un système de déplacement de gaz pouvant être raccordé à la traversée de gaz (4) et doté d'un entraînement ;
- un capteur (7) pouvant être raccordé au système de déplacement de gaz ou au récepteur d'échantillons (1) pour la mesure de la dépression ;
- un dispositif de commande (8) électrique qui est raccordé à l'entraînement et au capteur (7) et qui est aménagé pour

(i) mettre l'entraînement en marche de telle sorte qu'il s'installe dans le récepteur d'échantillons une dépression p qui croît de façon régulière et qui augmente selon un taux dp/dt ;

(ii) mesurer l'allure temporelle de la dépression dans le récepteur d'échantillons (1) ;

(iii) déterminer l'instant de l'afflux de liquide dans le récepteur d'échantillons (1) sur la base d'une divergence de la variation de pression dans le temps dans deux périodes successives de la mesure de pression ;

(iv) soit arrêter l'entraînement du système de déplacement de gaz à l'instant de l'afflux, soit continuer le fonctionnement de façon régulière ;

(v) déterminer le volume reçu $\Delta v$ selon $\Delta v = \Delta p \times G$, G étant une valeur caractéristique d'appareil et $\Delta p$ une variation de pression qui est calculée différemment selon que, à partir de l'instant de l'afflux, l'entraînement continue à fonctionner avec un taux de pompage inchangé ou selon que cet entraînement est arrêté à l'instant de l'afflux, le calcul s'effectuant dans le premier cas comme suit

$$\Delta p = (dp/dt) \, \Delta t + p_E - p$$

et dans le deuxième cas comme suit

$$\Delta p = p_E - p,$$

$p_E$ désignant la dépression à l'instant de l'afflux, $\Delta t$ désignant la durée écoulée depuis l'instant de l'afflux et p désignant la dépression mesurée ; et la caractéristique d'appareil étant définie par

$$G = -v_E/(p_E + p_o),$$

ou par

$$G = \Delta v^*/(dp/dt),$$

$p_O$ désignant la pression absolue, $v_E$ le volume du système de déplacement de gaz et du récepteur d'échantillons à l'instant de l'afflux, (dp/dt) le taux spécifié dans le point (i), et $\Delta v^*$ le taux de déplacement de volume du système de déplacement de gaz avant l'instant de l'afflux ;

(vi) comparer le volume reçu déterminé à une valeur prédéfinie du volume à recevoir ;

(vii) supprimer brusquement la dépression appliquée au récepteur d'échantillons lorsque la valeur prédéfinie est atteinte par le volume reçu ;

(viii) faire sortir le récepteur d'échantillons du liquide.

**11.** Dispositif selon la revendication 10, dans lequel le dispositif de commande électrique (8) est aménagé pour déterminer un ou plusieurs paramètres d'écoulement à partir du volume reçu, d'une dépression de travail prédéfinie et de la durée de la réception du volume, pour mettre en marche l'entraînement de telle sorte qu'une surpression est appliquée à la traversée de gaz, pour déterminer, à l'aide du/des paramètre(s) d'écoulement et de la surpression, l'instant où un volume à distribuer est distribué, et pour arrêter brusquement l'entraînement quand l'instant est atteint.

**12.** Dispositif selon la revendication 11, dans lequel le dispositif de commande électrique (8) est aménagé pour appliquer une surpression constante.

**13.** Dispositif selon la revendication 11, dans lequel le dispositif de commande électrique (8) est aménagé pour, au moyen du/des paramètre(s) d'écoulement, de la surpression déterminée par le capteur de pression (7) et du temps d'action respectif de la surpression, déterminer le volume distribué au total et pour mettre à l'arrêt l'entraînement quand le volume déterminé correspond au volume à distribuer.

**14.** Dispositif selon une des revendications 11 à 13, dans lequel le dispositif de commande électrique (8) est aménagé pour, lors de la détermination de l'instant où le volume à distribuer est distribué, prendre en compte la dépendance de la caractéristique d'écoulement de sortie du récepteur d'échantillons (1) selon une courbe pression-volume de référence.

**15.** Dispositif selon une des revendications 10 à 14, dans lequel le dispositif de commande électrique (8) est aménagé pour commander l'entraînement de telle façon que la dépression lors de la réception soit inférieure à la surpression lors de la distribution de liquide.

**16.** Dispositif selon une des revendications 10 à 15, dans lequel le dispositif de commande électrique (8) est aménagé pour commander l'entraînement de telle sorte que la dépression lors de la réception et/ou la surpression lors de la distribution surmonte les effets de limites de surface et/ou de frottement lors de la réception et/ou de la distribution de liquide.

**17.** Dispositif selon une des revendications 10 à 16, dans lequel le dispositif de commande électrique (8) est aménagé pour commander l'entraînement de telle façon que la surpression lors de la distribution expulse du récepteur d'échantillons (1) le liquide dans le jet libre.

**18.** Dispositif selon une des revendications 10 à 17, dans lequel le dispositif de commande électrique (8) est aménagé pour commander l'entraînement de telle sorte que le liquide reçu est délivré par étapes partielles à partir du récepteur d'échantillons (1).

**19.** Dispositif selon une des revendications 10 à 18, dans lequel le dispositif de commande électrique (8) dispose d'une sortie vocale acoustique.

**20.** Dispositif selon la revendication 19, dans lequel la sortie vocale acoustique est réalisée de telle sorte qu'elle délivre des messages adaptés à différents processus de travail.

**21.** Dispositif selon la revendication 19 ou 20, dans lequel la sortie vocale acoustique est réalisée par des actionneurs piézoélectriques ou des actionneurs à membrane.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1150105 A